**Europäisches Patentamt**

**European Patent Office**

**Office européen des brevets**

(19)

(11) Veröffentlichungsnummer : **0 085 647**
**B1**

(12) # EUROPÄISCHE PATENTSCHRIFT

(45) Veröffentlichungstag der Patentschrift :
16.04.86

(21) Anmeldenummer : **83730014.4**

(22) Anmeldetag : **01.02.83**

(51) Int. Cl.⁴ : **E 21 B 17/042, F 16 L 15/00**

(54) **Gasdichte Ölfeldrohrverbindung.**

(30) Priorität : 03.02.82 DE 3203857

(43) Veröffentlichungstag der Anmeldung :
10.08.83 Patentblatt 83/32

(45) Bekanntmachung des Hinweises auf die Patenterteilung : 16.04.86 Patentblatt 86/16

(84) Benannte Vertragsstaaten :
**AT BE FR GB IT NL**

(56) Entgegenhaltungen :
DE-A- 1 525 893
DE-B- 1 129 125
FR-A- 1 360 257
FR-A- 1 571 744
FR-A- 2 324 973
US-A- 2 110 825
US-A- 3 850 461
US-A- 4 085 951

(73) Patentinhaber : **MANNESMANN Aktiengesellschaft**
**Mannesmannufer 2**
**D-4000 Düsseldorf 1 (DE)**

(72) Erfinder : **Lenze, Friedrich, Dr.**
**Lerchenweg 9a**
**D-4030 Ratingen (DE)**
Erfinder : **Jedamzik, Erwin**
**Thomas-Mann-Strasse 28**
**D-4152 Kempen 1 (DE)**

(74) Vertreter : **Meissner, Peter E., Dipl.-Ing. et al**
**Herbertstrasse 22**
**D-1000 Berlin 33 (DE)**

**Beschreibung**

Die Erfindung betrifft eine gasdichte Ölfeld-rohrverbindung, insbesondere Bohrgestängerohre, gemäß dem Oberbegriff des Patentanspruchs 1 sowie ein Verfahren zum gasdichten Verbinden von Ölfeld-Rohren gemäß dem Oberbegriff des Patentanspruchs 3.

Eine Ölfeldrohrverbindung im Sinne des Oberbegriffes des Patentanspruchs 1 ist aus der US-A-21 10 825 bekannt. Aus der US-A-40 85 951 ist eine weitere gasdichte Ölfeldrohrverbindung ekannt, die aus Zapfen- und Muffenteil besteht, die miteinander verschraubt werden und wobei zwischen beiden in einer Nut ein Polytetrafluor-äthylenring angeordnet ist. Der Ring soll hierbei vor dem Verschrauben der Teile erwärmt werden, wobei aber Einzelheiten nicht angegeben werden.

Weiterhin ist aus der DE-B-11 29 125 eine Weichdichtung bekannt, die in eine Nut auf der im wesentlichen zylindrischen Fläche der Muffe eingebracht ist.

Bekannt ist es aus der FR-A-13 60 257 außerdem, die Weichdichtung in einer Nut auf der radialen Schulterfläche der Muffe anzuordnen. Bei diesen Anordnungen der Weichdichtung erfordert die Herstellung der Verbindung einen Zusätzlichen Aufwand im Vergleich zu gasdichten Verbindungen mit einer Abdichtung Metall auf Metall. Andererseits erfordern die weit verbreiteten Verbindungen mit Abdichtung Metall auf Metall eine sehr hohe Fertigungsgenauigkeit. Gegenwärtig sind letztere in der Anwendung favorisiert. Ein wesentliches Kriterium dieser Verbindungen ist die Empfindlichkeit gegen Beschädigung der außen liegenden Dichtflächen unmittelbar am Zapfenende. Dabei treten die Schäden beim Transport und beim Einbau auf, wenn die im Bohrturm frei hängenden Zapfenenden gegen feststehende Metallkörper schlagen.

Aus der US-A-29 80 451 ist eine bekannt, bestehend aus Zapfen- und Muffenteil, wobei in einer Nut des Zapfens oder der Muffe ein PTFE-Dichtring eingelegt ist. Wie dieser Ring auf- bzw. eingebracht wird, wird im Einzelnen nicht erläutert.

Aufgabe der Erfindung ist eine sowohl einfach herzustellende, wie auch einfach und zuverlässig zu handhabende Ölfeldrohrverbindung, dabei soll die Verbindung mindestens ebenso gasdicht und flüssigkeitsdicht sein wie bekannte und diese Eigenschaft auch dann besitzen, wenn die Verbindungen mehrmals verschraubt werden, hohen Temperaturen (bis 250 °C) und korrosiven Angriffen ausgesetzt sind, wobei beim Auf- bzw. Einbringen PTFE-Dichtringe den besonderen Materialeigenschaften unter Berücksichtigung einer notwendigerweise starken Dehnung Rechnung getragen werden soll.

Die Lösung der Aufgabe ist die Lehre nach dem Anspruch 1 bzw. dem Anspruch 3. Dazu ist noch zu sagen, daß es sich beim Abkühlen nicht um ein Abschrecken durch Kaltes Wasser, sondern lediglich um ein Abkühlen an ruhender oder leicht bewegter Luft handelt.

Bevorzugte Anwendung findet die Erfindung bei Ölfeldrohrverbindungen mit konischem Gewinde, so daß es sich von selbst ergibt, daß die Andruckfläche der Muffe konisch ist. In diesem Fall kann gemäß Anspruch 2 verfahren werden. Da durch höhere Abkühlgeschwindigkeit der Schrumpfgrad kleiner ist, entsteht bei stirnseitiger Abkühlung aus einem ursprünglich zylindrischen Ring ein innen und außen konischer Ring. Das Einfädeln in eine innen konische Muffe wird durch die Konizität des Ringes erleichtert.

An sich ist es schon von mit gummielastischen Dichtringen ausgestatteten Verbindungen her bekannt, den Ring auf dem Zapfenteil anzuordnen. Dies ist aber kein Vorbild und auch keine Anregung für die gegenwärtige Verbindung, da ein auf den Nutgrunddurchmesser dimensionierter gummielastischer Ring sich nach dem Überstreifen über den dicken Zapfen auf dem Nutgrund zusammenzieht und fest sitzt. Dies ist bei PTFE-Ringen nicht der Fall. Sie sind unelastische und können nur durch Wärmeeinfluß aufgeweitet und geschrumpft werden. Diese Abdichtung muß, wie es an sich bekannt ist, zur Abdichtung unter mechanischem Druck stehen. Darüber hinaus zeigt das Material bei Raumtemperatur unter Druck Kriecheigenschaften, so daß ein PTFE-Ring in einer kammerartigen Nut eingeschlossen werden muß und nicht wie gummielastische Ringe in einer wenig tiefen Rille gelagert sein kann.

Eine vorteilhafte Fortentwicklung des Erfindungsgedankens ist durch die Merkmale des Anspruchs 2 gekennzeichnet. Diese Ausführung hat funktionelle Vorteile. Sie bestehen darin, daß ein hoher Druck auf den PTFE-Ring aufgebracht werden kann und damit eine zuverlässige Abdichtung erzeugt wird. Außerdem kann die stirnseitige Abkühlung durch die Schulterfläche des Zapfenteiles erfolgen und eine konische Ringform erzeugt werden, wenn während der gezielten Abkühlungsphase eine Berührung mit dem Nutengrund vermieden wird.

In den Figuren ist ein Ausführungsbeispiel, das dem Anspruch 4 genügt, schematisch dargestellt.

Figur 1 zeigt den Längshalbschnitt durch eine Ölfeldrohr-Gewindeverbindung.

Figur 2 zeigt im Halbschnitt zur Mittelachse der Bohrung den PTFE-Ring.

In beiden Figuren bedeutet die Position Nr. 1 der PTFE-Ring. Die Rohrverbindung besteht aus dem Muffenteil 2 und dem Zapfenteil 3. Beide sind miteinander verschraubt dargestellt und ihre konischen Gewinde greifen bei 4 ineinander, und sie treffen außerdem an den Schultern 5 und 6 aufeinander.

Am Zapfenteil 3 ist zwischen Gewinde 4 und Schulter 6 eine umlaufende Nut mit Grund 7 vorgesehen, die den PTFE-Ring 1 aufnimmt. Der gegenüberliegende Bereich des Gewindes 4 an dem Muffenteil 2 ist entfernt, so daß eine glatte konische Druckfläche 8 zur Anlage des PTFE-Ringes 1 sich ergibt.

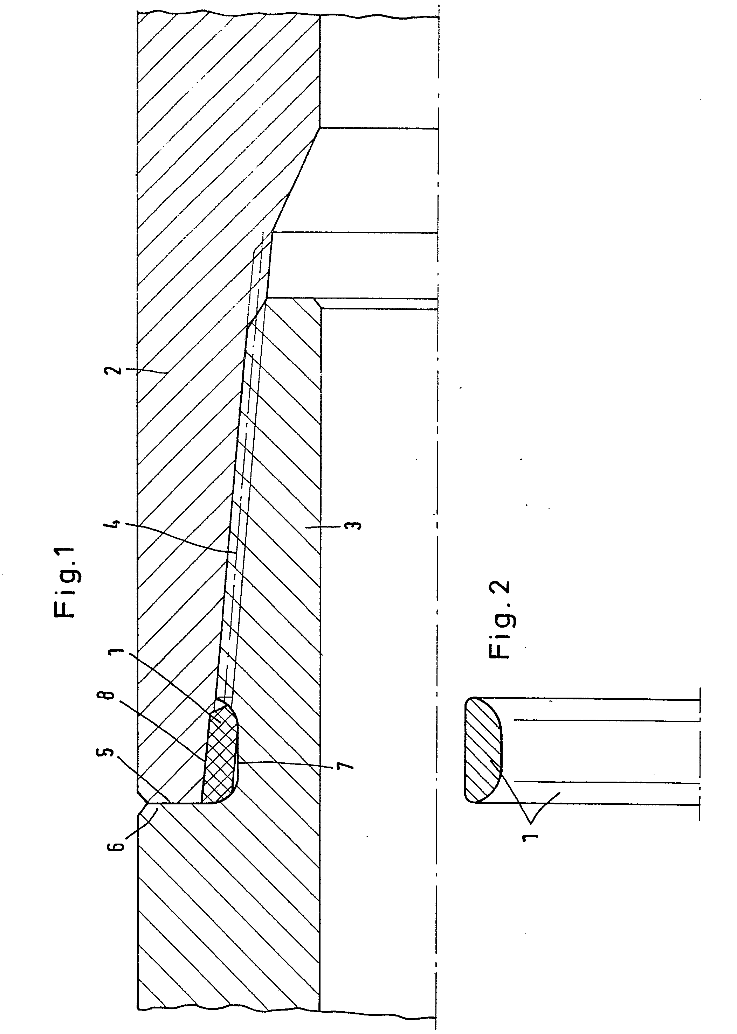

In der Werkstatt werden die Gewinde hergestellt und der Zapfenteil 3 zur Erstausstattung dortselbst mit einem PTFE-Ring 1 versehen. Letzterer wird im Ofen auf einer Temperatur zwischen 350 und 380 °C erwärmt. Das Material ist in diesem Zustand amorph und glasklar. Mit dieser Temperatur wird der PTFE-Ring 1 von rechts in der Figur 1 über das Zapfenteil 3 gestreift und über der Nut gehalten und gegen die Schulter 6 gedrückt. Dadurch erfolgt eine raschere Abkühlung und eine weniger große Schrumpfung des Ringes 1 in der Nähe der Schulter 6 als von dieser entfernt. Der Ring 1 wird vollständig erkaltet im Nutgrund 7 aufsitzen. Seine Außenkontur ist konisch sich zur Schulter 6 hin erweiternd. Es ist kaum noch zu befürchten, daß die Muffe 2 beim Aufschrauben mit ihrer Schulter 5 gegen den Ring 1 stößt und diesen beschädigt.

Nachdem der Ring 1 vollständig erkaltet ist, wird das Muffenteil 2 aufgeschraubt und die Verbindung mit einem dieser gemässen Moment verschraubt. Das Muffenteil 2 ist entweder eine Muffe mit Muffengewinde an beiden Enden oder das andere Ende eines mit Zapfengewinde versehenen Rohres.

**Patentansprüche**

1. Gasdichte Ölfeld-Rohrverbindung, insbesondere für Bohrgestängerohre, aus einem konischen Zapfen- und einem diesen angepaßten Muffenteil (3, 2), die miteinander verbindbar, insbesondere verschraubbar sind und zwischen denen in einer auf dem Außenumfang des Zapfenteiles angeordneten Ringnut (7) ein diese vollständig ausfüllender Ring aus Polytetrafluoräthylen (1) vorgesehen ist, gegen den eine Andruckfläche des Muffenteils radial anpreßbar ist, wobei sich die Ringnut an jenem Ende des konischen Zapfenteils (3) befindet, welches den größeren Außendurchmesser aufweist, dadurch gekennzeichnet, daß die Nuttiefe annähernd 5 % bis maximal 20 % der Breite des Nutengrundes (7) beträgt, wobei die der Ringnut zugeordnete Andruckfläche (8) des Muffenteils (2) gleichfalls konisch ausgebildet ist.

2. Rohrverbindung nach Anspruch 1, bei der das Zapfen- und das Muffenteil miteinander verschraubbar sind, dadurch gekennzeichnet, daß sich die Ringnut (7) zwischen dem Ende des Zapfengewindes (4) mit dem größeren Außendurchmesser und einer radialen Zapfenschulter (6) befindet, der eine radiale Muffenschulter (5) zugeordnet ist.

3. Verfahren zum gasdichten Verbinden von Ölfeld-Rohren durch Zusammenfügen, insbesondere Verschrauben des konischen Zapfen- und Muffenteils (3, 2) einer Rohrverbindung nach den Ansprüchen 1 und 2, bei dem zunächst ein Dichtring (1) aus PTFE durchgehend erwärmt, so dann in eine in den Außenumfang des Zapfenteiles eingearbeitete Nut (7) eingelegt und anschließend abgekühlt wird, wonach das Zapfen- und das Muffenteil (3, 2) zusammengefügt werden und die Rohrverbindung im wesentichen durch Andrücken einer auf dem Muffenteil (2) angeordneten Fläche gegen den Dichtring (1) abgedichtet wird, dadurch gekennzeichnet, daß der Dichtring (1) vor seinem Einlegen in die Nut (7) des Zapfenteils (3) auf eine Temperatur oberhalb der Umwandlungstemperatur kristallin/ amorph und unterhalb der Verflüssigungs- bzw. Zersetzungstemperatur des PTFE erwärmt und durchwärmt sowie danach in eine am Ende des Zapfenteiles (3) mit dem größeren Außendurchmesser in dessen Außenumfang eingearbeitet Ringnut (7) eingelegt wird, wonach die Abkühlung des Dichtringes (1) axial von jener Ringseite aus vorgenommen wird, die der größeren lichten Weite des Muffenteils (2) zugeordnet ist.

**Claims**

1. Gas-tight oilfield pipe connection, in particular for drill pipes, having a tapered spigot (3) and a socket (2) fitting therewith, which can be connected to each other, in particular can be screwed together, and between which in an annular groove (7) arranged at the outer circumference of the spigot a ring of polytetrafluoroethylene (1) is provided, filling this groove completely, against which ring a contact pressure surface of the socket can be pressed radially, the annular groove being situated at the end of the tapered spigot (3) which has the greater external diameter, characterized in that the groove depth amounts to approximately 5 % to a maximum of 20 % of the width of the groove base (7), and in that the contact pressure surface (8) of the socket (2) associated with the annular groove is likewise of tapered form.

2. Pipe connection according to Claim 1, in which the spigot and the socket can be screwed to each other, characterized in that the annular groove (7) is situated between the end of the spigot thread (4) with the greater external diameter and a radial spigot shoulder (6) with which a radial socket shoulder (5) cooperates.

3. Method for the gas-tight connection of oilfield pipes by joining together, in particular screwing, of the tapered spigot and socket (3, 2) of a pipe connection according to Claims 1 and 2, in which a sealing ring (1) of polytetrafluoroethylene is firstly thoroughly heated, is then inserted into a groove (7) which is formed in the outer circumference of the spigot and is subsequently cooled down, after which the spigot and socket (3, 2) are joined together and the pipe connection is substantially sealed by the pressing of a surface disposed on the socket (2) against the sealing ring (1), characterized in that prior to its insertion into the groove (7) of the spigot (3) the sealing ring (1) is heated to a temperature above the crystalline/amorphous transformation temperature and below the liquefaction or decomposition temperature of the polytetrafluoroethylene and is heated through and thereafter is inserted into an annular groove (7) which is formed in the external circumference of the spigot at the end of the spigot (3) with the greater external diameter, after which the cooling of the sealing ring (1) is carried out axially from the side of the ring which is associated with the greater inside width of the socket.

## Revendications

1. Joint étanche aux gaz pour tubes pétroliers, en particulier pour tubes de tiges de forage, comportant une partie de tourillon conique (3) et une partie de manchon (2) adaptée à celle-ci, qui peuvent être reliées l'une à l'autre, en particulier par vissage, et entre lesquelles est prévu, dans une gorge annulaire (7) prévue sur la périphérie externe de la partie de tourillon, un anneau (1) en polytétrafluoroéthylène remplissant totalement celle-ci, anneau contre lequel une surface de pression de la partie de manchon peut être pressée radialement, la gorge annulaire se trouvant à cette extrémité de la partie de tourillon (3) conique qui présente le plus grand diamètre extérieur, caractérisé en ce que la profondeur de la gorge représente environ 5 % à 20 % au maximum de la largeur du fond (7) de la gorge, la surface de pression (8) de la partie de manchon (2) associée à la gorge annulaire étant également réalisée conique.

2. Joint selon la revendication 1, pour lequel la partie de tourillon et la partie de manchon peuvent être vissées l'une avec l'autre, caractérisé en ce que la gorge annulaire (7) se trouve entre l'extrémité du filet de tourillon (4) de plus grand diamètre extérieur et un épaulement radial (6) de tourillon, auquel est associé un épaulement de manchon (5) radial.

3. Procédé pour relier de façon étanche aux gaz des tubes pétroliers en assemblant, en particulier par vissage, les parties de manchon (2) et de tourillon (3) coniques d'un joint selon les revendications 1 et 2, dans lequel, tout d'abord, un anneau d'étanchéité (1) en polytétrafluoroéthylène est chauffé de façon continue, puis disposé dans une gorge (7) prévue dans la périphérie extérieure de la partie de tourillon et enfin refroidi, après quoi les parties de manchon (2) et de tourillon (3) sont assemblées et le joint est rendu étanche principalement par pression d'une surface disposée sur la partie de manchon (2) contre l'anneau d'étanchéité (1), caractérisé en ce que l'anneau d'étanchéité (1), avant d'être placé dans la gorge (7) de la partie de tourillon (3), est chauffé à une température supérieure à la température de changement d'état cristallin/amorphe et inférieure à la température de fusion ou de décomposition du polytétrafluoéthylène et est maintenu ainsi à température, puis il est disposé dans une gorge annulaire (7) prévue dans la périphérie externe de l'extrémité de la partie de tourillon (3) de plus grand diamètre externe, après quoi l'anneau d'étanchéité (1) est refroidi axialement à partir de ce côté de l'anneau qui est associé au diamètre intérieur le plus grand de la partie de manchon (2).

# Fig.1

# Fig.2

0 085 647